# EUROPEAN PATENT SPECIFICATION

(11) **EP 3 447 627 B1**
(45) Date of publication and mention of the grant of the patent: **20.03.2024**
(21) Application number: 18190440.0
(22) Date of filing: 23.08.2018
(51) Int. Cl.: G06F 3/04886, G06F 3/04842, G06F 3/038, G06F 3/041

(54) **METHOD FOR DETERMINING INPUT DETECTION REGION CORRESPONDING TO USER INTERFACE AND ELECTRONIC DEVICE THEREOF**
VERFAHREN ZUR BESTIMMUNG EINES EINER BENUTZERSCHNITTSTELLE ENTSPRECHENDEN EINGABEERFASSUNGSBEREICHS UND ELEKTRONISCHE VORRICHTUNG DAFÜR
PROCÉDÉ DE DÉTERMINATION DE ZONE DE DÉTECTION D'ENTRÉE CORRESPONDANT À UNE INTERFACE D'UTILISATEUR ET SON DISPOSITIF ÉLECTRONIQUE

(30) Priority: 23.08.2017 KR 20170106453
(43) Date of publication of application: 27.02.2019
(73) Proprietor: Samsung Electronics Co., Ltd., Gyeonggi-do 16677 (KR)
(72) Inventor: CHOI, Seong-Hoon, Yongin-si (KR); JOO, Jaesook, Seongnam-si (KR); KWON, Yong-Jin, Suwon-si (KR); NA, Hyoung-Youn, Uiwang-si (KR); MUN, Jeongsik, Suwon-si (KR); JEON, Gyehun, Suwon-si (KR); CHUNG, Bohwa, Seoul (KR); CHO, Jun-Hee, Suwon-si (KR); HEO, Seung, Seoul (KR)
(74) Representative: Nederlandsch Octrooibureau

(56) References cited:
- EP-A1- 2 177 981
- US-A1- 2004 212 601
- US-A1- 2013 120 278

## Description

### BACKGROUND

### 1. Field

The disclosure relates to a method and device for determining an area where input corresponding to a user interface can be detected based on an input object in an electronic device.

### 2 Description of Related Art

The above information is presented as background information only to assist with an understanding of the disclosure. No determination has been made, and no assertion is made, as to whether any of the above might be applicable as prior art with regard to the disclosure.

Various electronic devices that provide various functions with the development of information communication technology and semiconductor technology have been developed into multimedia devices that provide various multimedia services. For example, the multimedia services may include at least one of a voice call service, a message service, a broadcasting service, a wireless internet service, a camera service, an electronic payment service, and a music play service.

Electronic devices can provide user interfaces corresponding to multimedia services. For example, electronic devices can display a user interface (e.g., service image) corresponding to an application in at least a region on a display so that a user can control the application.

US 2013/120278 A1 describes a touch screen configured to display a graphical user interface with one or more input options and detect which input options are selected by a user by detecting a user's contact on the touch screen. A new graphical user interface configuration is determined to increase the size and/or spacing of the input options.

EP 2177981 A1 describes a method for determining a key input in a computing equipment having a touch screen, the method including, upon occurrence of a touch input on the touch screen, determining an input type of the touch input, expanding a key input recognition region of at least one key when the input type is a finger touch input, and detecting the key input according to the expanded key input recognition region.

### SUMMARY

Aspects of the disclosure are to address at least the above-mentioned problems and/or disadvantages and to provide at least the advantages described below. Accordingly, an aspect of the disclosure is to provide an electronic device for creating a window for displaying an application when it executes the application. The application can be displayed in at least a region of a display through the window. An electronic device can set an input detection region corresponding to a window slightly (e.g., 30dp) larger than the window region where an application is displayed so that a user can easily input a touch on the displayed application using a part (e.g., fingers) of his/her body. When detecting the input from the user through the input detection region corresponding to the window region, the electronic device can determine that it has detected the user input corresponding to the window.

Another aspect of the disclosure is to provide an electronic device that can set an input detection region having a size fixed to a window where it can detect touch input. Accordingly, when other input objects (e.g., a mouse or an electronic pen) that can provide more precise touch input than the body of a user are used for an electronic device, a touch input error may be generated by an input detection area of a window set in consideration of the body of users. For example, a user of an electronic device can touch icons close to a window, using an electronic pen. However, when touch input is detected through an input detection region of a window, the electronic device determines that the touch input is touch input corresponding to the window and can perform operation different from the user's intention.

Additional aspects will be set forth in part in the description which follows and, in part, will be apparent from the description, or may be learned by practice of the presented embodiments.

Various embodiments of the disclosure can provide a device and method for adaptively setting an input detection region of a user interface based on an input object in an electronic device, as defined in the appending claims.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIGS. 1A and 1B are perspective views of an electronic device according to various embodiments of the disclosure;
FIG. 1C is a diagram showing a configuration of an electronic device displaying information through an external device according to various embodiments of the disclosure;
FIG. 2 is a block diagram of an electronic device according to various embodiments of the disclosure;
FIG. 3 is a block diagram of a program according to various embodiments of the disclosure;
FIG. 4 is a flowchart illustrating setting an input detection region in an electronic device according to various embodiments of the disclosure;
FIG. 5 is a diagram showing an input detection region corresponding to an input object according to various embodiments of the disclosure;
FIG. 6 is a flowchart illustrating setting an input detection region based on an input object in an electronic device according to various embodiments of the disclosure;
FIG. 7 shows an image configuration for changing an icon according to various embodiments of the disclosure;
FIG. 8 is a flowchart illustrating setting an input detection region based on overlapping windows in an electronic device according to various embodiments of the disclosure;
FIG. 9 is a diagram showing an input detection region set based on overlapping windows according to various embodiments of the disclosure;
FIG. 10 is a flowchart illustrating setting an input detection region based on an operation mode in an electronic device according to various embodiments of the disclosure;
FIG. 11 is a flowchart illustrating determining a window corresponding to input in an electronic device according to various embodiments of the disclosure;
FIG. 12 shows an image configuration for determining a window corresponding to input according to various embodiments of the disclosure;
FIG. 13 is a flowchart illustrating setting an operation mode, using an input detection region, in an electronic device according to various embodiments of the disclosure; and
FIG. 14 is a block diagram of an electronic device in a network environment for setting an input detection region based on an input object according to various embodiments of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

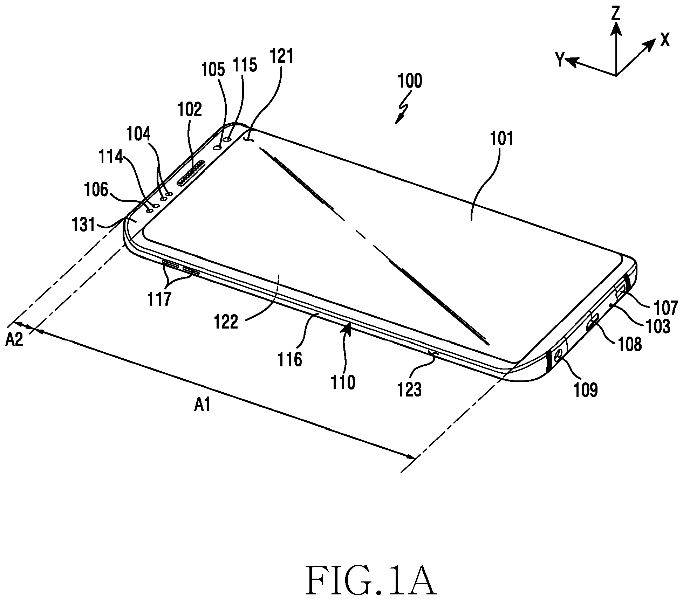

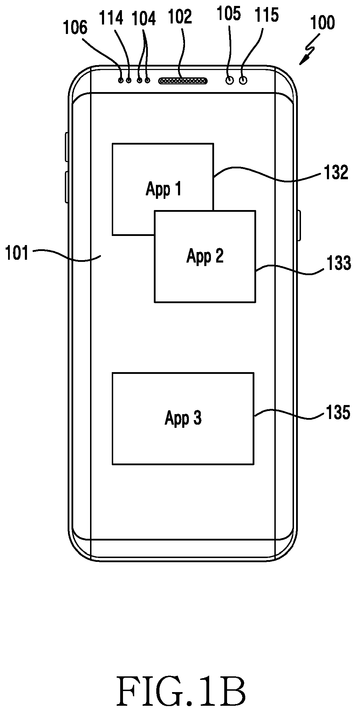

FIGS. 1A and 1B are perspective views of an electronic device according to various embodiments of the disclosure.

Referring to FIGS. 1A and 1B, an electronic device 100 includes a housing 110. For example, the housing 110 may be made of a conductive material and/or a nonconductive material.

According to an embodiment, the housing 110 may have a first side 121 (e.g., the front or the top) facing a first direction (e.g., a Z-axial direction), a second side 122 (e.g., the rear or the bottom) opposite to the first side 121, and a side 123 surrounding at least a portion of the first side 121 and the second side 122. For example, the side 123 is combined with a front plate 131 and a rear plate and may be formed by a side bezel structure 116 including metal and/or a polymer.

According to an embodiment, the electronic device 100 may include the front plate 131 (e.g., a window or a glass plate) disposed on the first side 121 and a display 101 may be exposed through a first region A1 of the front plate 131.

According to an embodiment, the electronic device 100 may have a receiver hole 102 for calling. For example, the electronic device 100 uses a speaker therein and can be controlled such that a user of the electronic device 100 can converse with a counterpart through the receiver hole 102 for calling.

According to an embodiment, the electronic device 100 may have a mic hole 103. For example, the electronic device 100 uses one or more microphones disposed therein and being able to sense the direction of sound, and can receive sound from the outside through the mic hole 103.

According to an embodiment, the electronic device 100 may have one or more key input devices 117. For example, the key input devices 117 may include one or more side key buttons on the side 123 of the housing 110. The side key buttons may include a volume button, a power button, or a specific function button (e.g., for performing an artificial intelligent mode or a quick voice recognition mode).

According to an embodiment, the electronic device 100 may include components that are exposed on the display 101 or that perform functions through the front plate 131 without being exposed to perform various functions of the electronic device 100. For example, at least some of the components may be disposed in a second region A2 of the front plate 131. For example, the components may include one or more sensor modules 104. For example, the sensor modules 104 may include an illumination sensor (e.g., a light sensor), a proximity sensor (e.g., a light sensor), an infrared (IR) sensor, an ultrasonic sensor, a fingerprint sensor, a face sensor, or an iris sensor. For example, the components may include a first camera 105. For example, the components may include an indicator 106 (e.g., a light emitting diode (LED)) for visually providing the state information of the electronic device 100 to a user. For example, the components may include a light source 114 (e.g., an IR LED) disposed at a side of the receiver hole 102. For example, the components may include an imaging sensor assembly 115 (e.g., an iris camera) for detecting an iris image with light emitted to the user's eye from the light source 114. For example, one or more of the components may be disposed to be exposed through at least a region of the second side 122 (e.g., the rear or the bottom) facing the direction (e.g., a -Z-axial direction) opposite to the first direction in the electronic device 100.

According to an embodiment, the electronic device 100 may include a recess 107 (e.g., a pen slot) on which an electronic pen is seated. According to an embodiment, the electronic device 100 may include a first connector hole 108 for transmitting/receiving data to/from an external device and charging the electronic device 100 by receiving power from the outside. According to an embodiment, the electronic device 100 may include a second connector hole 109 (e.g., an ear jack assembly) for receiving an ear jack of an external device.

According to the invention, the display 101 is configured to output data. The display 101, as shown in FIG. 1B, is configured to display the information of one or more applications that are executed by the electronic device 100. For example, the display 101 can display the information of applications through windows 132, 133, and 135 respectively corresponding to the applications.

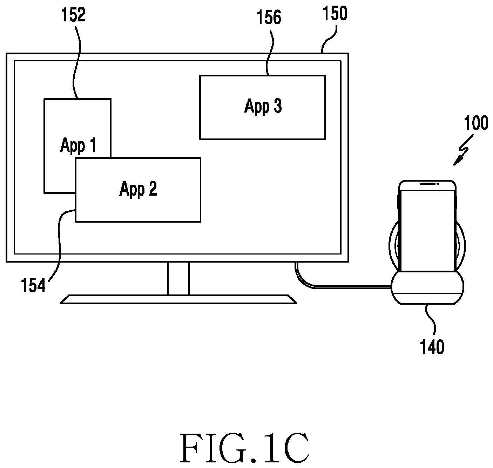

FIG. 1C is a diagram showing a configuration of an electronic device displaying information through an external device according to various embodiments of the disclosure.

Referring to FIG. 1C, the electronic device 100 can be connected with an external device 150 through a docking device 140. For example, the electronic device 100 can operate in a desktop expansion mode when docked to the docking device 140. When operating in the desktop expansion mode, the electronic device 100 can output a user interface for operating the electronic device 100 through the external device 150. For example, the electronic device 100 can display user interfaces of one or more applications, which are executed by the electronic device 100, through the external device 150. The user interfaces of the applications can be display on the external device 150 through windows 152, 154, and 156 respectively corresponding to the applications.

According to an embodiment, the electronic device 100, the docking device 140, and the external device 150 can be connected through a wire or wirelessly. For example, the electronic device 100, the docking device 140, and the external device 150 can be connected through a wire. For example, the electronic device 100, the docking device 140, and the external device 150 can be wirelessly connected. For example, the electronic device 100 and the docking device 140 can be connected through a wire, and the docking device 140 and the external device 150 can be wirelessly connected. For example, the electronic device 100 and the docking device 140 can be wirelessly connected, and the docking device 140 and the external device 150 can be connected through a wire.

According to an embodiment, the electronic device 100 and the external device can be directly connected through a wire or wirelessly.

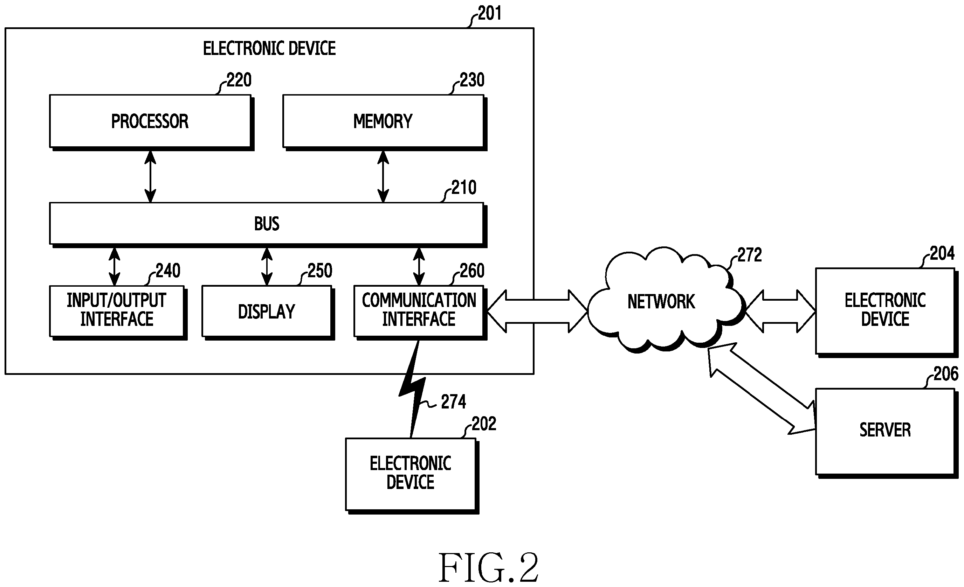

FIG. 2 is a block diagram of an electronic device according to various embodiments of the disclosure. An electronic device may include the entire or a portion of the electronic device 100 shown in FIGS. 1A, 1B, and 1C in the following description.

Referring to FIG. 2, an electronic device 201 includes a processor (e.g., including processing circuitry) 220, a memory 230, a display 250, and may include a bus 210, an input/output (I/O) interface (e.g., including input/output circuitry) 240, and a communication interface (e.g., including communication circuitry) 260. In another embodiment, the electronic device 201 may not include one or more of the components or may additionally include other components.

The bus 210, for example, may include a circuit that connects the components (220 to 260) and transmits signals (for example, control messages and/or data) among the components.

The processor 220 can perform calculation or data processing about control and/or communication of one or more other components of the electronic device 201. For example, the processor 220 may include one or more of a central processing unit (CPU), an application processor (AP), a communication processor (CP), and an image signal processor (ISP).

According to the invention, the processor 220 is configured to detect an input detection region of a user interface displayed on the display 250. For example, when an application is executed, the display 250 can be controlled to display a user interface of the application through a window corresponding to the application. When creating a window of an application, the processor 220 can create a plurality of input detection regions having different sizes and corresponding to the window. When input is detected through the I/O interface 240, the processor 220 can determine an input detection region corresponding to the kind of an input object of the plurality of input detection regions as a regions for detecting input corresponding to a window displayed on at least a portion of the display 250. For example, the input detection region of a window may include a virtual region set to be adjacent to the edge of the window displayed on at least a portion of the display 250. The input detection region of a window may not be displayed or may be displayed to be discriminated from the widow on the display 250. The input detection region may be set in various shapes, such as a polygon, a circle, and a semicircle, adjacent to the edge of a window. For example, a window may include a region set to display a user interface of an application on the display 250.

According to an embodiment, the processor 220 can set an input detection region of a user interface based on the operation mode of the electronic device 201. For example, when the electronic device 201 has been set as an input device of an external device (e.g., a first external electronic device 202), the processor 220 can set the input detection region of a window displayed on the display of the external device in a size corresponding to a mouse (pointing device). For example, the electronic device 201 (e.g., the electronic device 100 shown in FIG. 1C) can be set as an input device (e.g., a touch pad) of a wired or wirelessly connected external device (e.g., the external device 150 shown in FIG. 1C). Even if receiving input by the body (e.g., fingers) of a user, the processor 220 can set an input detection region of a window displayed on an external device in a size corresponding to a mouse regardless of the input object (e.g., the body of the user).

According to the invention, the processor 220 is configured to deform an input detection region of a user interface displayed on the display 250 based on overlapping information with another window. When several windows overlap each other, the processor 220 reduces at least a portion, which overlaps another window, of the input detection region of a window. For example, the processor 220 can reset the size of the portion overlapping another window while maintaining the size of the other portion not overlapping the window, of the input detection region of a window.

According to an embodiment, the processor 220 can executed an application of a window corresponding to an input detection region based on input corresponding to the input detection region. For example, when receiving input through an input detection region of a window displayed on at least a portion of the display 250, the processor 220 can perform a function corresponding to the input through an application corresponding to the window. For example, when receiving input through an input detection region of a window displayed on at least a portion of the display 250, the processor 220 can adjust the size of the window based on the input.

According to an embodiment, when several windows overlap each other, the processor 220 can select a window corresponding to input based on the overlapping order (e.g., Z-order) of the windows. For example, a plurality of applications is executed, the processor 220 can control the display 250 to display user interfaces of one or more applications through a plurality of windows respectively corresponding to the applications. When several windows overlap each other at a position corresponding to input detected through the I/O interface 240, the processor 220 can determine the window having the highest overlapping order (disposed at the highest layer) as a window for processing the input.

The memory 230 may include a volatile and/or nonvolatile memory. The memory 230 can store, for example, commands or data related to one or more other components of the electronic device 201. The data can include information (e.g., size and shape) of input detection regions having different sizes and corresponding to a window. For example, the memory 230 can store applications including user interfaces.

The I/O interface 240 can transmit commands or data input from a user or another external device to other component(s) of the electronic device 201. For example, the I/O interface 240 may include one or more physical buttons such as a home button, a power button, and a volume button. The I/O interface 240 can output commands or data received from other component(s) of the electronic device 201 to a user or other external devices. For example, the I/O interface 240 may include a speaker for outputting audio signals and a microphone for collecting audio signals.

The display 250 can display various contents (for example, a text, an image, a video, an icon, and/or a symbol) to a user. For example, the display 250 may include a touch screen. The display 250 can receive touching, gesturing, approaching, or hovering input by an electronic pen or a part of the body of a user.

The communication interface 260 can set communication between the electronic device 201 and an external device (for example, the first external electronic device 202, a second external electronic device 204, or a server 206). For example, the communication interface 260 can be connected to a network 272 and can communicate with an external device (for example, the second external electronic device 204 or the server 206) through wireless communication or wire communication. For example, the communication interface 260 can communicate with an external device (e.g., the first external electronic device 202) through near field communication 274.

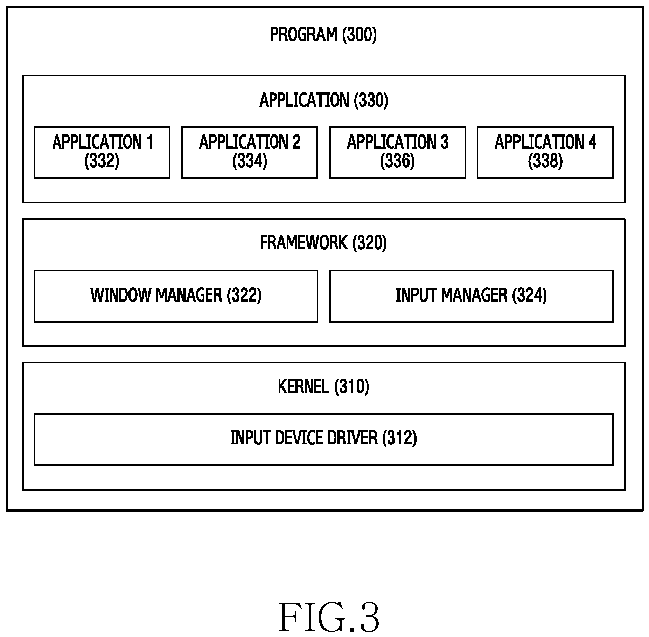

FIG. 3 is a block diagram of a program according to various embodiments of the disclosure. According to an embodiment, a program may include an operating system (OS) for controlling resources related to an electronic device (e.g., the electronic device 201 shown in FIG. 2) and/or various applications that are driven on the OS. The OS, for example, may include Android^{™}, iOS^{™}, Windows^{™}, Symbian^{™}, Tizen^{™}, or Bada^{™}.

Referring to FIG. 3, a program 300 may include a kernel 310, a framework 320, and/or an application 330. At least a portion of the program 300 can be pre-loaded to the electronic device 201 or can be downloaded from an external electronic device (e.g., the external electronic devices 202 and 204 and the server 206 shown in FIG. 2).

The kernel 310 can provide an interface that can control or manage system resources. According to an embodiment, the kernel 310 may include an input device driver 312. The input device driver 312 can control one or more input devices connected to an electronic device. For example, one or more input devices may include a mouse, a keyboard, a touch screen, an electronic pen, and a track ball.

The framework 320 can provide functions that all of the applications 330 need, or can provide various functions to the applications 330 so that the applications 330 can use limited system resources in the electronic device. According to an embodiment, the framework 320 may include a window manager 322 and an input manager 324. The window manager 322 can manage a graphical user interface (GUI) resource that is used for the screen. For example, the window manager 322 can create a window with an application displayed, when the application is executed in the electronic device. The window manager 322 can create a plurality of input detection regions having different sizes and corresponding to a window. The input manager 324 can manage input of an electronic device. For example, when an input event occurs, the input manager 324 can recognize an input object of the input event. The input manager 324 can transmit an input event to the window manager 322 or the application 330 based on information of a window or an input detection region provided from the window manager 322. For example, the input manager 324 can determine the input detection region of a window displayed on the display 250 based on the input object of an input event. When an input event corresponding to the region of a window or an input detection region occurs, the input manager 324 can provide the input event to the application 330 displayed in the window. For example, an input event for adjusting the size of a window occurs, the input manager 324 can provide the input event to the window manager 322. For example, the window information may include one or more of the height, width, and position of a window created by the window manager 322.

The application 330 may include one or more applications 332, 334, 336 and 338 that are driven in an electronic device. According to an embodiment, the application 330 may include an application designated in accordance with the property of an external electronic device (for example, a healthcare application of a mobile medical device). According to an embodiment, the application 330 may include an application received from an external electronic device.

At least a portion of the program 300 can be implemented (for example, executed) in software, firmware, hardware (for example, the processor 220), or a combination of at least two of them, and may include a module, a program, a routine, an instruction set, or a process for performing one or more functions.

According to various embodiments which are not according to the claimed invention, an electronic device includes a display, a processor, and a memory functionally connected to the processor. The memory can store instructions that make one or more processors display the user interface of an application on at least a portion of the display, receive user input outside the portion where the user interface is displayed on the display, through the display, check the input object that has provided the user input, check whether the user input is included in the input detection region of the user interface displayed on the display and corresponding to the input object that has provided the user input, and control the application to use the user input when the user input is included in the input detection region.

According to various embodiments, the input object may include one or more of the body of a user, an electronic pen, and an external pointing device.

According to various embodiments, the instructions may include instructions that are set to make the one or more processors determine a first region for displaying the user interface through the display and create a plurality of input detection regions having different sizes and corresponding to the first region.

According to various embodiments, the instructions may include instructions that are set to make the one or more processor select any one input detection region corresponding to an input object, which has provided the user input, of a plurality of input detection regions having different sizes and corresponding to a region for displaying the user interface, and set the selected input detection region as an input detection region of the user interface displayed on the display.

According to various embodiments, the instructions may include instructions that are set to make the one or more processors update of the sizes of at least a portion, which overlap another user interface, of the input detection region of the user interface displayed on the display when the user interfaces of a plurality of applications overlap each other on the display.

According to various embodiments, the instructions may include instructions that are set to make the one or more processors check whether the electronic device has been set as an input device of an external input device, and set an input detection region of a user interface displayed on the display regardless of the input object that has provided the user input when the electronic device has been set as an input device of an external device.

According to various embodiments, the instructions may include instructions that are set to make the one or more processors set the input detection region of the user interface displayed on the display as a second region when the input object that has provided the user input is a part of the body of a user, set the input detection region of the user interface displayed on the display as a third region included in the second region when the input object that has provided the user input is a part of the body of a user, and set the input detection region of the user interface displayed on the display as a fourth region included in the third region when the input object that has provided the user input is a part of the body of a user.

According to various embodiments, the instructions may include instructions that are set to make the one or more processors, when a plurality of user interface is displayed in a region where the user input was detected, determine a user interface for processing the user input based on the overlapping order of the user interfaces.

According to various embodiments, the instructions may include instructions that are set to make the one or more processors change an icon displayed on at least a portion of the display based on the user interface in the input detection region when the user input is included in the input detection region.

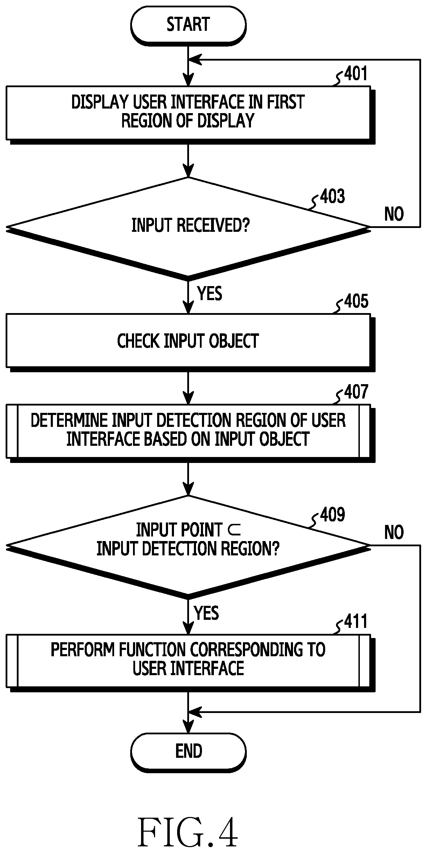

FIG. 4 is a flowchart illustrating setting an input detection region in an electronic device according to various embodiments of the disclosure.

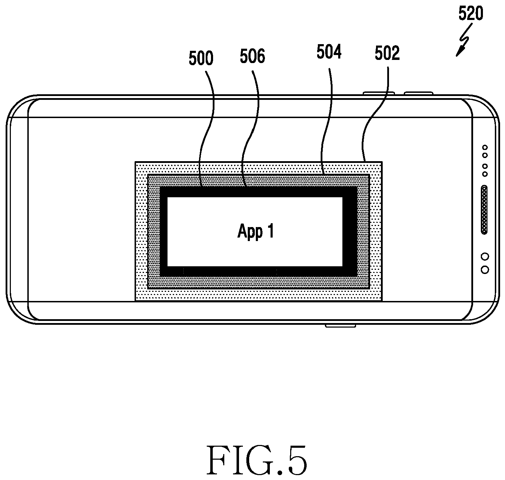

FIG. 5 is a diagram showing an input detection region corresponding to an input object according to various embodiments of the disclosure. In the following description, an electronic device may include the electronic device 201 shown in FIG. 2 or at least a portion (for example, the processor 220) of the electronic device 201.

Referring to FIGS. 4 and 5, an electronic device is configured to display a user interface in a first region of a display in operation 401. For example, when operating an application 1, the processor 220 can create a window 500 for displaying the first application 1 on at least a portion of a display 520 (e.g., the display 250 shown in FIG. 2), as shown in FIG. 5. The processor 220 can control the display 520 to display a user interface of the application 1 through the window 500. According to an embodiment, the processor 220 can create a plurality of input detection regions 502, 504, and 506 having different sizes and corresponding to the window 500. For example, the input detection regions 502, 504, and 506 can be created based on the kind of an input object (e.g., a finger, an electronic pen, or a mouse) that is supported by the electronic device 201. For example, the first region where a user interface is displayed may include the window 500 of the user interface.

The electronic device is configured to check whether input was received in operation 403. For example, the processor 220 can check whether user input was detected on the display 250 that displays the user interface including the first region. The processor 220 is configured to check whether user input was detected through the display 250 outside the first region (e.g., the window 500 shown in FIG. 5).

When the electronic device does not receive input, it can keep displaying the user interface for the first region of the display in operation 401.

When the electronic device receives input, it checks the input object of the input in operation 405. The processor 220 is configured to check the kind of the input object that has generated an input event.

In operation 407, the electronic device determines an input detection region of the user interface displayed on the display based on the input object. When input (e.g., touch input) by a finger of a user is detected, the processor 220 determines a second input detection region 502 corresponding to the body of the user of the input detection regions 502, 504, and 506 corresponding to the window 500 as the input detection region of the window 500. When input (e.g., touch input) by an electronic pen is detected, the processor 220 determines a third input detection region 504 corresponding to the electronic pen of the input detection regions 502, 504, and 506 corresponding to the window 500 as the input detection region of the window 500. For example, when input by a mouse is detected, the processor 220 can determine a fourth input detection region 506 corresponding to the mouse of the input detection regions 502, 504, and 506 corresponding to the window 500 as the input detection region of the window 500. The input detection region determined based on an input object is set to be adjacent to the window 500 outside the window 500 and to surround at least a portion of the window 500, and input corresponding to the window 500 can be received through the input detection region.

The electronic device, in operation 409, checks whether input corresponding to the input detection region of a user interface was received. The processor 220 is configured to check whether the input point of input received in operation 403 is in the input detection regions 502, 504, and 506 of the window 500 displayed on the display 520.

When receiving input corresponding to the input detection region of the user interface, the electronic device performs a function corresponding to input of the user interface in operation 411. For example, when input corresponding to the input detection region 502 of the window 500 is received, the processor 220 can transmit input event information to an application corresponding to the window 500. The processor 220 can perform a function corresponding to an input event through the application. For example, when input corresponding to the input detection region 504 of the window 500 by an electronic pen is received, the processor 220 can adjust the size of the window 500 based on the input. For example, the processor 220 can increase or decrease the size of the window 500 displayed on the display 520 through the window manager 322 shown in FIG. 3.

When receiving input outside the input detection region of the user interface, the electronic device can perform a function corresponding to input point of the input in operation 409. For example, when there is no function corresponding to the input point of the input received in operation 403, the processor 220 can ignore the input.

According to an embodiment, an electronic device can determine an input detection region of a window displayed on a display based on the input object corresponding to user input. For example, when the input object of an input event is changed from an electronic pen to the body (e.g., a finger) of a user, the processor 220 can change the input detection region of the window 500 displayed on the display 520 from the third input detection region 504 corresponding to the electronic pen to the second input detection region 502 corresponding to the body of the user (e.g., increase the size). For example, when the input object of an input event is changed from the body of a user to a mouse, the processor 220 can change the input detection region of the window 500 displayed on the display 520 from the second input detection region 502 corresponding to the body of the user to the fourth input detection region 506 corresponding to the mouse (e.g., decrease the size).

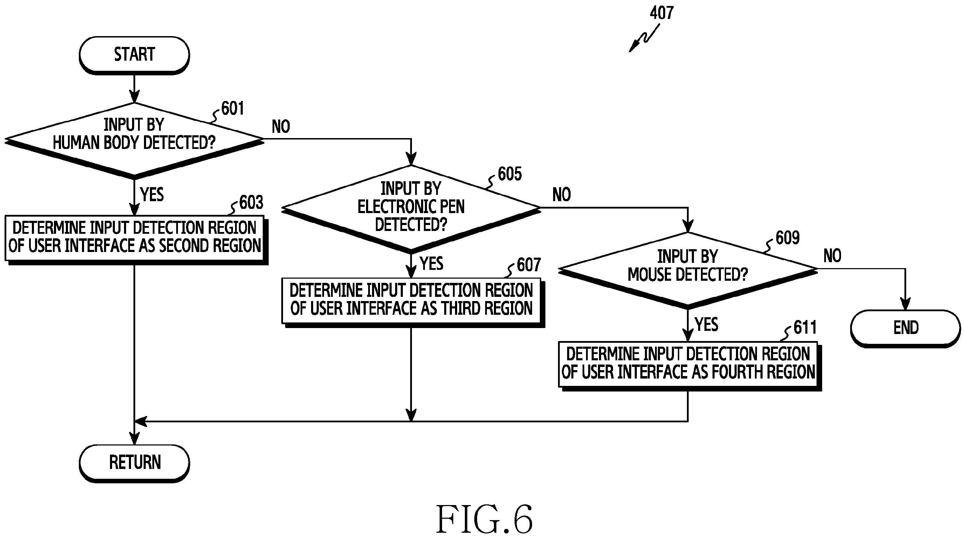

FIG. 6 is a flowchart illustrating setting an input detection region based on an input object in an electronic device according to various embodiments of the disclosure. An operation for setting an input detection region of a user interface in operation 407 of FIG. 4 is described hereafter. In the following description, an electronic device may include the electronic device 201 shown in FIG. 2 or at least a portion (for example, the processor 220) of the electronic device 201.

Referring to FIG. 6, when receiving input (e.g., operation 403 of FIG. 4), an electronic device can check whether the received input was made by a finger of a user. For example, the processor 220 can check whether an input event was generated due to touch by a finger of a user through the input manager 324 shown in FIG. 3.

When receiving input by a finger of a user, the electronic device, in operation 603, determines the input detection region of a user interface as a second region (e.g., 15dp) corresponding to the body of a user. For example, the processor 220, as shown in FIG. 5, can determine the second input detection region 502 corresponding to a finger of a user of the input detection regions 502, 504, and 506 corresponding to the window 500 displayed on the display 520 as the input detection region of the window 500. The second input detection region 502 is set to be adjacent to the window 500 and surround at least a portion of the window 500.

When the received input was not made by a finger of a user, the electronic device, in operation 605, can check whether the received input was made by an electronic pen. For example, the processor 220 can check whether an input event was generated by an electronic pen through the input manager 324 shown in FIG. 3.

When receiving input by an electronic pen, the electronic device, in operation 607, determines the input detection region of a user interface as a third region (e.g., 10dp) corresponding to an electronic pen. For example, the processor 220, as shown in FIG. 5, can determine the third input detection region 504 corresponding to an electronic pen of the input detection regions 502, 504, and 506 corresponding to the window 500 displayed on the display 520 as the input detection region of the window 500. The third input detection region 504 is adjacent to the window 500 as the first input detection region, surrounds at least a portion of the first input detection region, and is positioned inside the second input detection region 502. The third input detection region 504 may be set to in an area smaller than the area (e.g., size) of the second input detection region 502.

When the received input was not made by an electronic pen, the electronic device, in operation 609, can check whether the received input was made by a mouse.

When the received input was not made by a mouse, the electronic device, in operation 609, can determine that the input detection region of the user interface has not been set. For example, when the received input was not made by the body of a user, an electronic pen, and a mouse, the processor 220 can determine that the input was made by an input object (e.g., a keyboard) that does not need to use an input detection region.

When receiving input by a mouse, the electronic device, in operation 611, can determine the input detection region of the user interface as a fourth region (e.g., 5dp) corresponding to a mouse. For example, the processor 220, as shown in FIG. 5, can determine the fourth input detection region 506 corresponding to a mouse of the input detection regions 502, 504, and 506 corresponding to the window 500 displayed on the display 520 as the input detection region of the window 500. For example, the fourth input detection region 506 may be adjacent to the window 500 as the first input detection region, may surround at least a portion of the first input detection region, and may be positioned inside the third input detection region 504. The fourth input detection region 506 may be set to in an area smaller than the areas of the second input detection region 502 and the third input detection region 504.

According to an embodiment, when receiving input through an input object to which the input setting region is not matched, an electronic device can set an input setting region defined in advance as an input setting region of a window displayed on a display. For example, the processor 220, as show in FIG. 5, can create the second input detection region 502 corresponding to a mouse, the third input detection region 504 corresponding to an electronic pen, and the fourth input detection region 506 corresponding to the body of a user, as the input detection region of the window 500. When input by an input object other than a mouse, an electronic pen, and the body of a user is received, the processor 220 can set an input setting region defined in advance as a region for detecting input of the window 500. For example, the input setting region defined in advance may include any one of the second input detection region 502, the third input detection region 504, and the fourth input detection region 506, or a specifically defined input detection region.

According to various embodiments of the disclosure, an electronic device can set input detection regions having the same size, when receiving input by an electronic pen and a mouse is received.

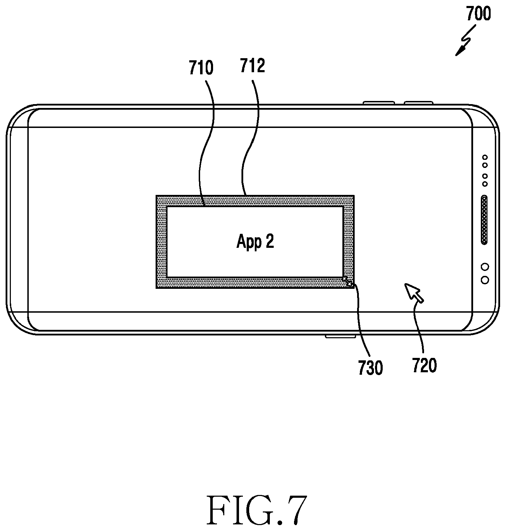

FIG. 7 shows an image configuration for changing an icon according to various embodiments of the disclosure. In the following description, an electronic device may include the electronic device 201 shown in FIG. 2 or at least a portion (for example, the processor 220) of the electronic device 201.

Referring to FIG. 7, an electronic device 700 can change an icon corresponding to an input point based on a function to be performed based on input. For example, when an input detection region 712 of a window 710 displayed on the display 250 is set based on an input object, the processor 220 can adjust the size of the window based on input received through the input detection region 712. For example, when input (e.g., mouse input or hovering input) is received through the input detection region 712, the processor 220 can control the display 250 to display an icon 730 corresponding to size adjustment of the window 710. For example, when input (e.g., mouse input or hovering input) is received through another region different from the input detection region 712, the processor 220 can control the display 250 to display a pointer 720 indicating the input point.

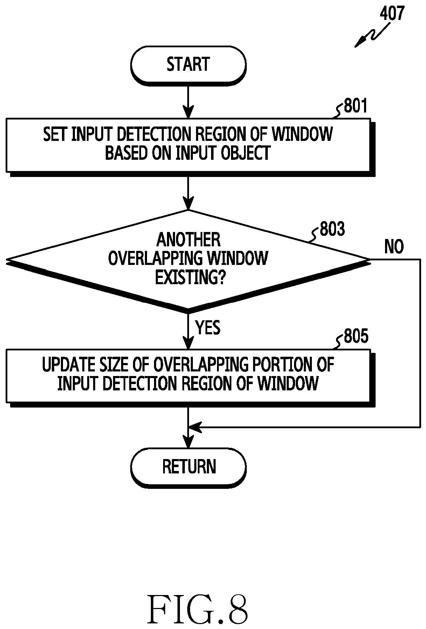

FIG. 8 is a flowchart illustrating setting an input detection region based on overlapping windows in an electronic device according to various embodiments of the disclosure.

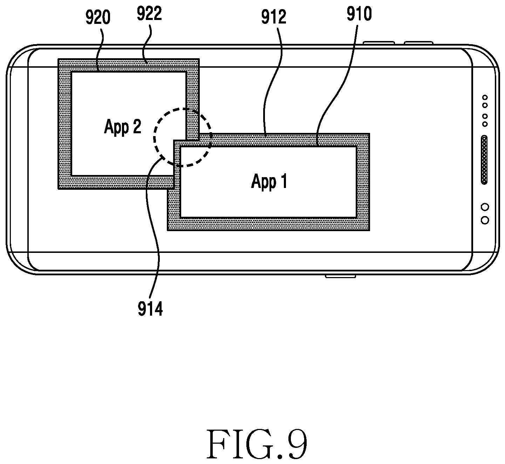

FIG. 9 is a diagram showing an input detection region set based on overlapping windows according to various embodiments of the disclosure. An operation for setting an input detection region of a user interface in operation 407 shown in FIG. 4 is described hereafter. In the following description, an electronic device may include the electronic device 201 shown in FIG. 2 or at least a portion (for example, the processor 220) of the electronic device 201.

Referring to FIGS. 8 and 9, when receiving input (e.g., operation 403 of FIG. 4), an electronic device, in operation 801, can set an input detection region of a window displayed on a display based on the input object of the input. For example, when creating a window, the processor 220 can create a plurality of input detection regions having different sizes and corresponding to the window. The processor 220 can determine an input detection region corresponding to the input object used for receiving input of a plurality of input detection regions as an input object of a window displayed on at least a portion of the display 250. For example, when a plurality of windows 910 and 920 is displayed on the display 250, as shown in FIG. 9, the processor 220 can set an input detection region 912 or 922 corresponding to a window 910 or 920 based on the input object used for receiving input.

The electronic device, in operation 803, can check whether there are overlapping windows of windows displayed on the display. For example, the processor 220 can check whether the windows 910 and 920 displayed on the display overlap each other.

When there are overlapping windows of windows displayed on the display, the electronic device, in operation 805, updates the size of the portion, which overlaps another window, of the input detection region of a window. For example, when the window 910 of a first application is disposed over at least a portion of the window 920 of a second application, as shown in FIG. 9, the processor can update the size of the overlapping region 914 of the input detection region 912 of the window 910 of the first application into the minimum size. For example, the processor 220 can update the overlapping region 914 into the minimum size while maintaining the size of the region, which does not overlap another widow (the window 920 of the second application), of the input detection region 912 of the window 910 of the first application. According to an embodiment, when user input is detected through the overlapping region 914, the processor 220 can select a window 910 or 920 corresponding to the user input based on the overlapping order (e.g., Z-order) of the window 910 of the first application and the window 920 of the second application. For example, when user input is received from the overlapping region 914 of the input detection regions 912 and 922 of the windows 910 and 920, the processor 220 can determine the window 910 of the first application as a window for processing the user input based on the overlapping order of the windows 910 and 920.

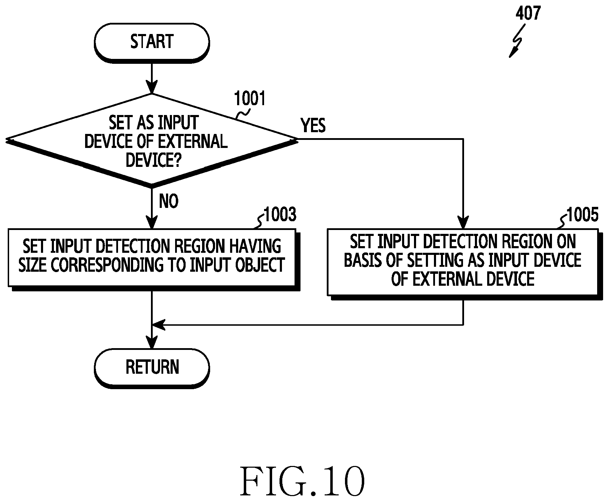

FIG. 10 is a flowchart illustrating setting an input detection region based on an operation mode in an electronic device according to various embodiments of the disclosure. An operation for setting an input detection region of a user interface in operation 407 shown in FIG. 4 is described hereafter. In the following description, an electronic device may include the electronic device 201 shown in FIG. 2 or at least a portion (for example, the processor 220) of the electronic device 201.

Referring to FIG. 10, in operation 1001 when input is received (operation 403 of FIG. 4), an electronic device (e.g., the processor 220) can check whether the electronic device has been set as an input device. For example, when the electronic device 100 (e.g., the electronic device 201) is connected to the external device 150 through the docking device 140, as shown in FIG. 1C, the processor 220 can check whether the operation of the electronic device 100 has been set as a mode for input of the external device 150.

When the electronic device has not been set as an input device of an external device, the electronic device, in operation 1003, can set an input detection region of a window displayed on the display based on an input object corresponding to the received input. For example, the processor 220 can determine an input detection region corresponding to the input object used for receiving input of a plurality of input detection regions having different sizes and corresponding to a window as an input detection region of a window displayed on at least a portion of the display 250 or the display of the external device.

When the electronic device has been set as an input device of an external device, the electronic device, in operation 1005, can set an input detection region of a window displayed on the display of the external device based on the setting the electronic device as an input device of the external device. For example, when the electronic device 100 is set as an input device of the external device 150, as shown in FIG. 1C, touch input by the body (e.g., a finger) of a user received by the electronic device 100 can be recognized like mouse input by the electronic device 100 in the external device 150. Accordingly, the electronic device 100 (e.g., the processor 220) can set an input detection region of a window displayed on the display of the external device 150 regardless of the input object that the electronic device 100 uses to receive input. For example, when the electronic device 100 has been set as an input device (e.g., a mouse) of the external device 150, the electronic device 100 (e.g., the processor 220) can determine an input detection region corresponding to a mouse as an input detection region of a window displayed on at least a portion of the display of the external device 150.

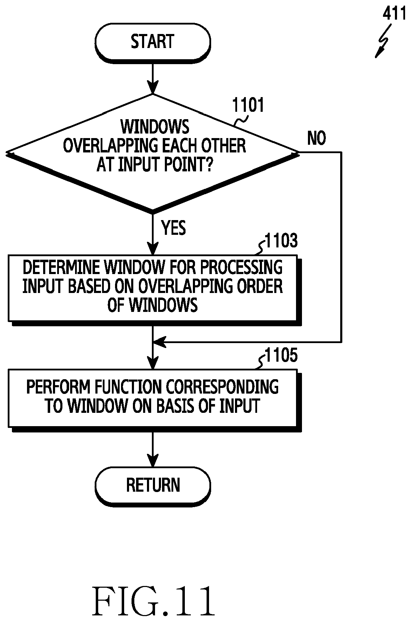

FIG. 11 is a flowchart illustrating determining a window corresponding to input in an electronic device according to various embodiments of the disclosure.

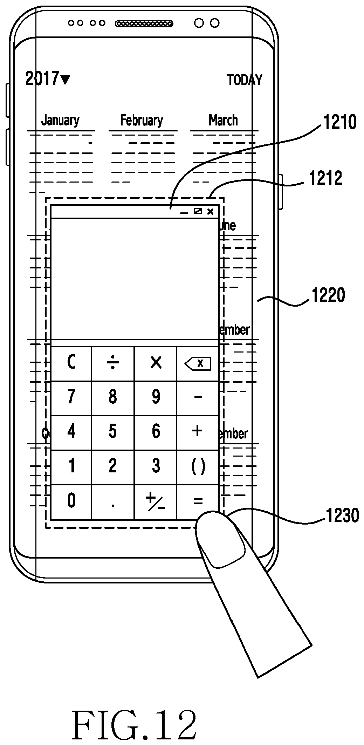

FIG. 12 shows an image configuration for determining a window corresponding to input according to various embodiments of the disclosure. An operation for performing a function corresponding to input of a user interface in operation 411 shown in FIG. 4 is described hereafter. In the following description, an electronic device may include the electronic device 201 shown in FIG. 2 or at least a portion (for example, the processor 220) of the electronic device 201.

Referring to FIGS. 11 and 12, in operation 1101 when input is received through an input detection region of a user interface (operation 409 of FIG. 4), an electronic device (e.g., the processor 220) can check whether several windows overlap each other at the input point. For example, in order to execute a calculator application, the processor can create a window 1210 corresponding to a calculator application, as shown in FIG. 12. The processor 220 can control the display 250 to display a user interface of the calculator application through the window 1210. When input by the body (e.g., a finger) of a user is detected (1230), the processor 220 can set an input detection region 1212 of the window 1210 displayed on at least a portion of the display 250 to correspond to the body (a finger) of a user. For example, when touch input 1230 detected through the body of a user is included in the input detection region 1212 of the window 1210 displayed on at least a portion of the display 250, the processor 220 can check whether several windows overlap each other at the position where the touch input 1230 was detected.

When several windows overlap each other at the input point, the electronic device, in operation 1103, can determine a window for processing input of the windows based on the overlapping order (e.g., Z-order) of the windows. For example, the calculator application can be displayed to overlap at least a portion of a calendar application displayed in the entire region of the display 250. When user input is detected through the input detection region 1212 of the window 1210 corresponding to the calculator application, the processor 220 can determine that the windows 1210 and 1220 of the calendar application and the calculator application overlap each other at the detection position of the user input. The processor 220 can determine an application for transmitting an input event as the calculator application based on the overlapping order of the calendar application and the calculator application.

When one window exists at the input point or a window for processing input is determined, the electronic device, in operation 1105, can perform a function corresponding to the input in the window. For example, the processor 220 can transmit an input event to the calculator application based on the overlapping order of the calendar application and the calculator application. The processor 220 can perform calculation (e.g., "=" calculation) corresponding to the input event through the calculator application.

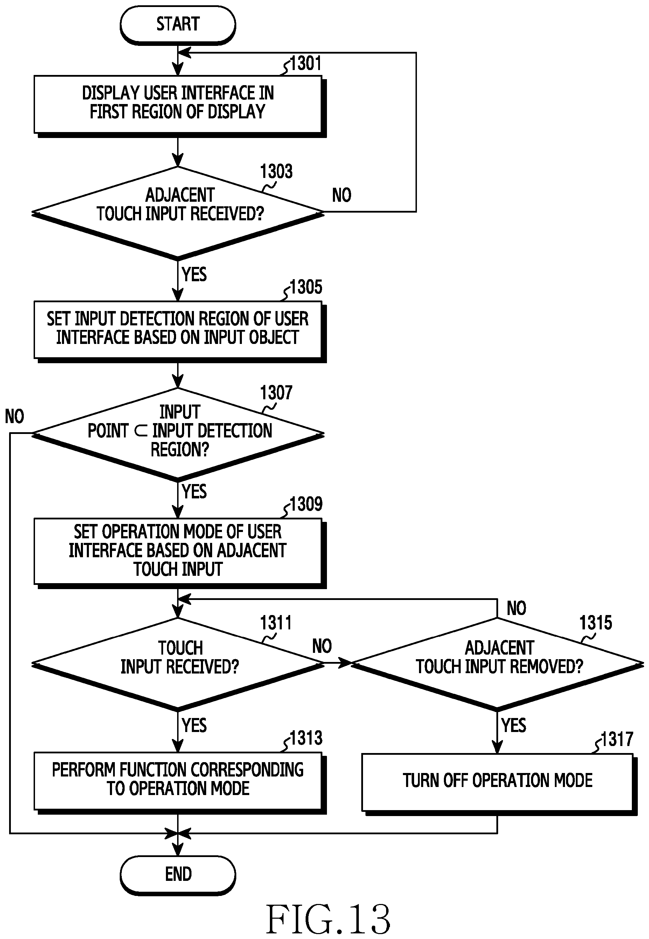

FIG. 13 is a flowchart illustrating setting an operation mode, using an input detection region, in an electronic device according to various embodiments of the disclosure. In the following description, an electronic device may include the electronic device 201 shown in FIG. 2 or at least a portion (for example, the processor 220) of the electronic device 201.

Referring to FIG. 13, an electronic device (e.g., the processor 220) can display a user interface in a first region of a display in operation 1301. For example, when an application is executed, the processor 220 can control the display 250 to display a user interface of the application through a window created on at least a portion of the display 250. The processor 220 can create a plurality of input detection regions having different sizes corresponding to the window at the point of time of creating the window.

The electronic device can check whether adjacent touch input has been received in operation 1303. For example, the adjacent touch input, which is input that is generated without an input object (e.g., an electronic pen) connected to the display 250, may include hovering input.

When the electronic device does not receive adjacent touch input, it can keep displaying the user interface for the first region of the display in operation 1301.

When receiving adjacent touch input, the electronic device, in operation 1305, can set an input detection region of the user interface displayed on the display based on the input object detecting the adjacent touch input. For example, when adjacent touch input by an electronic pen is detected, the processor 220 can set an input detection region of a window displayed on at least a portion of the display 250 based on the information of an input detection region corresponding to an electronic pen of a plurality of input detection regions corresponding to the window. For example, the information of an input detection region may include coordinate information for configuring the input detection region.

The electronic device, in operation 1307, can check whether adjacent touch input corresponding to the input detection region of a user interface has been received. For example, the processor 220 can check whether the detection position of the adjacent touch input received in operation 1303 is included in the input detection region of the user interface set in operation 1305.

When receiving adjacent touch input outside the input detection region of the user interface, the electronic device can perform a function corresponding to the adjacent touch input in operation 1307. For example, when there is no function corresponding to the input point of the adjacent touch input received in operation 1303, the processor 220 can ignore the input.

When receiving adjacent touch input corresponding to the input detection region of a user interface, the electronic device, in operation 1309, can set an operation mode for the user interface based on the adjacent touch input. For example, when receiving adjacent touch input corresponding to an input detection region of a window displayed on at least a portion of the display 250, the processor 220 can set a size adjustment mode of a window as an operation mode for the user interface.

The electronic device can check whether adjacent touch input has been received in operation 1311. For example, the processor 220 can check whether touch input corresponding to the adjacent touch input is detected. For example, the touch input may include input that is generated by contact on a touch screen.

When not receiving touch input in operation 1315, the electronic device can check whether adjacent touch input for the input detection region of the user interface is removed. For example, the processor 220 can check whether the adjacent touch input for the input detection region of the user interface received in operation 1303 is continuously maintained.

When the adjacent touch input for the input detection region of the user interface is continuously maintained, the electronic device can check whether touch input is received in operation 1311.

When the adjacent touch input for the input detection region of the user interface is removed, the electronic device, in operation 1317, can turn off the operation of the user interface set based on the adjacent touch input. For example, when adjacent touch input is out of the input detection region of a window or is not detected, the processor 220 can determine that the adjacent touch input for the input detection region of a user interface has been removed. In this case, the processor 220 can turn off the operation mode of the user interface set in operation 1309.

When receiving touch input, the electronic device, in operation 1313, can perform a function corresponding to the operation mode of the user interface based on the touch input. For example, when touch input corresponding to the adjacent touch input received in operation 1303 is received, the processor 220 can perform the operation mode of the user interface set in operation 1309 based on the touch input. For example, even if touch input corresponding to the adjacent touch input is out of the input detection region of the user interface, the processor 220 can perform the operation mode of the user interface set in operation 1309 based on the touch input.

According to various embodiments of the disclosure, an electronic device can set an input detection region corresponding to at least one input object of a multi-window, an edge menu, a pop-up window, a notification, and an icon.

The electronic device according to various embodiments and the method of operating the electronic device, it is possible to prevent a touch input not intended by a user of the electronic device by adaptively setting the size of an input detection region of a user interface based on an input object.

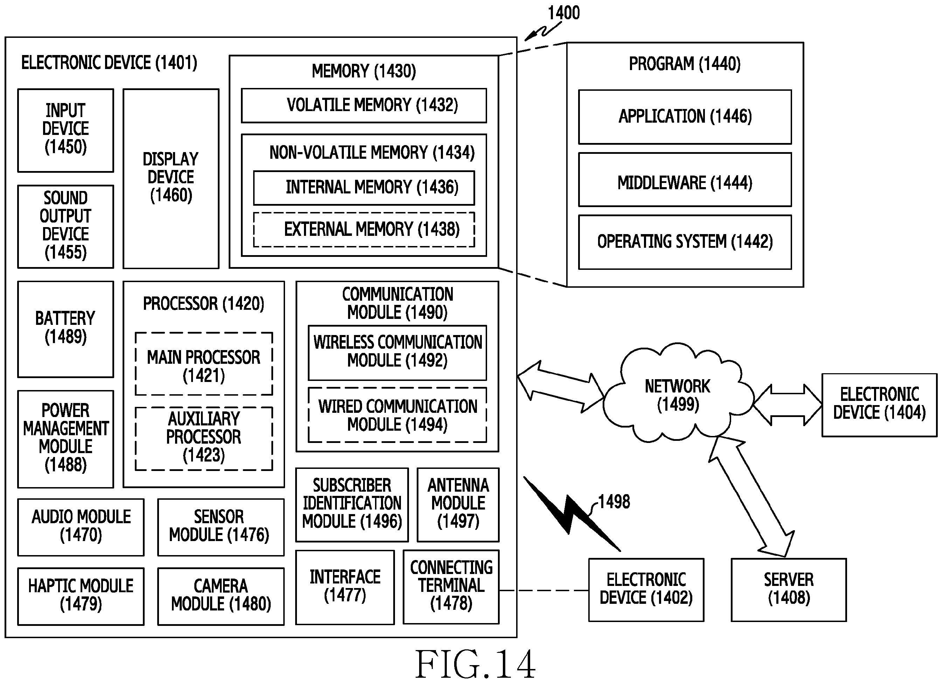

FIG. 14 is a block diagram illustrating an electronic device in a network environment according to various embodiments.

Referring to FIG. 14, an electronic device 1401 in a network environment 1400 may communicate with an external electronic device 1402 via a first network 1498 (e.g., a short-range wireless communication network), or an external electronic device 1404 or a server 1408 via a second network 1499 (e.g., a long-range wireless communication network). According to an embodiment, the electronic device 1401 may communicate with the external electronic device 1404 via the server 1408. According to an embodiment, the electronic device 1401 may include a processor 1420 (e.g., the processor 220 of FIG. 2), memory 1430 (e.g., the memory 230 of FIG. 2), an input device 1450, a sound output device 1455, a display device 1460 (e.g., the display 250 of FIG. 2), an audio module 1470, a sensor module 1476, an interface 1477, a haptic module 1479, a camera module 1480, a power management module 1488, a battery 1489, a communication module 1490 (e.g., the communication interface 260 of FIG. 2), a subscriber identification module (SIM) 1496, or an antenna module 1497. In some embodiments, at least one (e.g., the display device 1460 or the camera module 1480) of the components may be omitted from the electronic device 1401, or one or more other components may be added in the electronic device 1401. In some embodiments, some of the components may be implemented as single integrated circuitry. For example, the sensor module 1476 (e.g., a fingerprint sensor, an iris sensor, or an illuminance sensor) may be implemented as embedded in the display device 1460 (e.g., a display).

The processor 1420 may execute, for example, software (e.g., a program 1440) to control at least one other component (e.g., a hardware or software component) of the electronic device 1401 coupled with the processor 1420 and may perform various data processing or computation. According to one embodiment, as at least part of the data processing or computation, the processor 1420 may load a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a CPU or an AP), and an auxiliary processor 1423 (e.g., a graphics processing unit (GPU), an ISP, a sensor hub processor, or a CP) that is operable independently from, or in conjunction with, the main processor 1421. Additionally or alternatively, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an ISP or a CP) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an OS 1442, middleware 1444, or an application 1446.

The input device 1450 may receive a command or data to be used by other component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. According to an embodiment, the display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. According to an embodiment, the audio module 1470 may obtain the sound via the input device 1450, or output the sound via the sound output device 1455 or a headphone of an external electronic device (e.g., the external electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an IR sensor, a biometric sensor, a temperature sensor, a humidity sensor, or an illuminance sensor.

The interface 1477 may support one or more specified protocols to be used for the electronic device 1401 to be coupled with the external electronic device (e.g., the external electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the external electronic device 1402). According to an embodiment, the connecting terminal 1478 may include, for example, a HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, ISPs, or flashes.

The power management module 1488 may manage power supplied to the electronic device 1401. According to one embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the external electronic device 1402, the external electronic device 1404, or the server 1408) and performing communication via the established communication channel. The communication module 1490 may include one or more CPs that are operable independently from the processor 1420 (e.g., the AP) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. According to an embodiment, the antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to various embodiments thereof, it will be understood by those skilled in the art that various changes in form and details may be made therein without departing from the scope of the disclosure as defined by the appended claims.

## Claims

1. An electronic device (201) comprising:
a housing (110);
a display (101, 250) exposed through a portion of the housing and being adapted to receive at least one of finger or pen input;
one or more processors (220) operatively connected with the display; and
a memory (230) functionally connected with the one or more processors,
wherein the memory is configured to store applications including user interfaces, and
wherein the memory stores instructions, that when executed, configure the one or more processors to:
display a first user interface of a first application through a first window (500, 910) in a first region of the display,
receive user input with respect to an outside of the first region of the display,
determine whether the user input was provided by a finger or an electronic pen on the display,
determine whether the user input is in a second region (502), the second region being adjacent to the first region of the display and surrounding the first region, when the user input was provided by a finger,
determine whether the user input is in a third region (504), the third region being adjacent to the first region of the display, surrounding the first region, and is positioned inside the second region (502), when the user input was provided by the electronic pen, and
enable the first application to use the user input, as if the user input was provided in the first region, when the user input is in the second region or the third region,
**characterised in that** at least a portion of the first window (910) overlaps with at least a portion of a second window (920) of a second application, and
wherein a size of an overlapping portion (914) of the second or third region (912), which overlaps with the second window, is reduced with respect to a non-overlapping portion of the second or third region, which does not overlap with the second window.

2. The electronic device of claim 1, wherein the housing has a recess (107) receiving the electronic pen.

3. The electronic device of claim 1, wherein the third region has an area smaller than the area of the second region.

4. The electronic device of claim 1, wherein the electronic device can be operatively connected to an external pointing device, and
wherein the instructions, when executed, further configure the one or more processors to:
determine whether the user input was provided by the finger, the electronic pen, or the external pointing device,
determine whether the user input is in the second region of the display when the user input was provided by the finger,
determine whether the user input is in the third region of the display when the user input was provided by the electronic pen,
determine whether the user input is in a fourth region (506), the fourth region being adjacent to the first region of the display, surrounding the first region, and is positioned inside the third region, when the user input was provided by the external pointing device, and
enable the first application to use the user input, as if the user input was provided in the first region, when the user input is in the second region, the third region, or the fourth region.

5. The electronic device of claim 4, wherein the external pointing device includes a mouse.

6. The electronic device of claim 1, wherein the instructions, when executed, further configure the one or more processors to:
determine the first region for displaying the first user interface through the display, and
determine the second region and the third region that correspond to the first region, and display the first user interface in the first region of the display.

7. A method of operating an electronic device, the method comprising:
displaying (401) a first user interface of a first application through a first window (500, 910) in a first region of a display of the electronic device;
receiving (403) user input through the display with respect to an outside of the first region of the display;
determining (405) whether the user input was provided by a finger or an electronic pen on the display;
determining (603) whether the user input is in a second region (502), the second region being adjacent to the first region of the display and surrounding the first region, when the user input was provided by the finger;
determining (607) whether the user input is in a third region (504), the third region being adjacent to the first region of the display, surrounding the first region, and is positioned inside the second region, when the user input was provided by the electronic pen; and
enabling (411) the first application to use the user input, as if the user input is in the first region, when the user input is in the second region or the third region,
**characterized in that** at least a portion of the first window (910) overlaps with at least a portion of a second window (920) of a second application, and
wherein a size of an overlapping portion (914) of the second or third region (912), which overlaps with the second window, is reduced (805) with respect to a non-overlapping portion of the second or third region, which does not overlap with the second window.

8. The method of claim 7, wherein the third region has an area smaller than the area of the second region.

9. The method of claim 7, further comprising:
determining whether the user input was provided by the finger, the electronic pen, or an external pointing device;
determining whether the user input is in the second region of the display when the user input was provided by the finger;
determining whether the user input is in the third region of the display when the user input was provided by the electronic pen;
determining whether the user input is in a fourth region (506), the fourth region being adjacent to the first region of the display, surrounding the first region, and is positioned inside the third region, when the user input was provided by the external pointing device; and
enabling the first application to use the user input, as if the user input was provided in the first region, when the user input is in the second region, the third region, or the fourth region.

10. The method of claim 9, wherein the external pointing device includes a mouse.

11. The method of claim 7, wherein the displaying of the first user interface includes:
determining the first region for displaying the first user interface through the display;
determining the second region and the third region that correspond to the first region; and
displaying the first user interface in the first region of the display.

## Patentansprüche

1. Elektronische Vorrichtung (201), die Folgendes umfasst:
ein Gehäuse (110);
ein Display (101, 250), das durch einen Teil des Gehäuses freiliegt und geeignet ist, um eine Finger- und/oder Stifteingabe zu empfangen;
einen oder mehrere Prozessoren (220), die mit dem Display wirkverbunden sind; und
einen Speicher (230), der mit dem einen oder den mehreren Prozessoren funktionell verbunden ist,
wobei der Speicher konfiguriert ist, um Anwendungen zu speichern, die Benutzeroberflächen enthalten, und
wobei der Speicher Anweisungen speichert, die, wenn sie ausgeführt werden, den einen oder die mehreren Prozessoren zu Folgendem konfigurieren:
Anzeigen einer ersten Benutzeroberfläche einer ersten Anwendung durch ein erstes Fenster (500, 910) in einem ersten Bereich des Displays,
Empfangen der Benutzereingabe in Bezug auf eine Außenseite des ersten Bereichs des Displays,
Bestimmen, ob die Benutzereingabe durch einen Finger oder einen elektronischen Stift auf dem Display erfolgte,
Bestimmen, ob die Benutzereingabe in einem zweiten Bereich (502) erfolgt, wobei der zweite Bereich an den ersten Bereich des Displays angrenzt und den ersten Bereich umgibt, wenn die Benutzereingabe durch einen Finger erfolgte,
Bestimmen, ob die Benutzereingabe in einem dritten Bereich (504) erfolgt, wobei der dritte Bereich an den ersten Bereich des Displays angrenzt, den ersten Bereich umgibt und in dem zweiten Bereich (502) angeordnet ist, wenn die Benutzereingabe durch den elektronischen Stift erfolgte, und
Ermöglichen der ersten Anwendung, die Benutzereingabe zu verwenden, als ob die Benutzereingabe in dem ersten Bereich erfolgt wäre, wenn die Benutzereingabe in dem zweiten Bereich oder dem dritten Bereich erfolgt,
**gekennzeichnet dadurch, dass** mindestens ein Teil des ersten Fensters (910) mit mindestens einem Teil eines zweiten Fensters (920) einer zweiten Anwendung überlappt, und
wobei eine Größe eines überlappenden Teils (914) des zweiten oder dritten Bereichs (912), der mit dem zweiten Fenster überlappt, in Bezug auf einen nicht überlappenden Teil des zweiten oder dritten Bereichs reduziert ist, der nicht mit dem zweiten Fenster überlappt.

2. Elektronische Vorrichtung nach Anspruch 1, wobei das Gehäuse eine Aussparung (107) aufweist, die den elektronischen Stift aufnimmt.

3. Elektronische Vorrichtung nach Anspruch 1, wobei der dritte Bereich eine Fläche aufweist, die kleiner als die Fläche des zweiten Bereichs ist.

4. Elektronische Vorrichtung nach Anspruch 1, wobei die elektronische Vorrichtung mit einer externen Zeigevorrichtung wirkverbunden werden kann, und
wobei die Anweisungen, wenn sie ausgeführt werden, den einen oder die mehreren Prozessoren ferner zu Folgendem konfigurieren:
Bestimmen, ob die Benutzereingabe durch den Finger, den elektronischen Stift oder die externe Zeigevorrichtung erfolgte,
Bestimmen, ob die Benutzereingabe in dem zweiten Bereich des Displays erfolgt, wenn die Benutzereingabe durch den Finger erfolgte,
Bestimmen, ob die Benutzereingabe in dem dritten Bereich des Displays erfolgt, wenn die Benutzereingabe durch den elektronischen Stift erfolgte,
Bestimmen, ob die Benutzereingabe in einem vierten Bereich (506) erfolgt, wobei der vierte Bereich an den ersten Bereich des Displays angrenzt, den ersten Bereich umgibt und in dem dritten Bereich angeordnet ist, wenn die Benutzereingabe durch die externe Zeigevorrichtung erfolgte, und
Ermöglichen der ersten Anwendung, die Benutzereingabe zu verwenden, als ob die Benutzereingabe in dem ersten Bereich erfolgt wäre, wenn die Benutzereingabe in dem zweiten Bereich, dem dritten Bereich oder dem vierten Bereich erfolgt.

5. Elektronische Vorrichtung nach Anspruch 4, wobei die externe Zeigevorrichtung eine Maus enthält.

6. Elektronische Vorrichtung nach Anspruch 1, wobei die Anweisungen, wenn sie ausgeführt werden, den einen oder die mehreren Prozessoren ferner zu Folgendem konfigurieren:
Bestimmen des ersten Bereichs zum Anzeigen der ersten Benutzeroberfläche über das Display, und
Bestimmen des zweiten Bereichs und des dritten Bereichs, die dem ersten Bereich entsprechen, und Anzeigen der ersten Benutzeroberfläche in dem ersten Bereich des Displays.

7. Verfahren zum Betreiben einer elektronischen Vorrichtung, wobei das Verfahren Folgendes umfasst:
Anzeigen (401) einer ersten Benutzeroberfläche einer ersten Anwendung über ein erstes Fenster (500, 910) in einem ersten Bereich eines Displays der elektronischen Vorrichtung;
Empfangen (403) der Benutzereingabe über das Display in Bezug auf eine Außenseite des ersten Bereichs des Displays;
Bestimmen (405), ob die Benutzereingabe durch einen Finger oder einen elektronischen Stift auf dem Display erfolgte;
Bestimmen (603), ob die Benutzereingabe in einem zweiten Bereich (502) erfolgt, wobei der zweite Bereich an den ersten Bereich des Displays angrenzt und den ersten Bereich umgibt, wenn die Benutzereingabe durch den Finger erfolgte;
Bestimmen (607), ob die Benutzereingabe in einem dritten Bereich (504) erfolgt, wobei der dritte Bereich an den ersten Bereich des Displays angrenzt, den ersten Bereich umgibt und in dem zweiten Bereich angeordnet ist, wenn die Benutzereingabe durch den elektronischen Stift erfolgte; und
Ermöglichen (411) der ersten Anwendung, die Benutzereingabe zu verwenden, als ob die Benutzereingabe in dem ersten Bereich erfolgt wäre, wenn die Benutzereingabe in dem zweiten Bereich oder dem dritten Bereich erfolgt,
**gekennzeichnet dadurch, dass** mindestens ein Teil des ersten Fensters (910) mit mindestens einem Teil eines zweiten Fensters (920) einer zweiten Anwendung überlappt, und
wobei eine Größe eines überlappenden Teils (914) des zweiten oder dritten Bereichs (912), der mit dem zweiten Fenster überlappt, in Bezug auf einen nicht überlappenden Teil des zweiten oder dritten Bereichs reduziert ist (805), der nicht mit dem zweiten Fenster überlappt.

8. Verfahren nach Anspruch 7, wobei der dritte Bereich eine Fläche aufweist, die kleiner als die Fläche des zweiten Bereichs ist.

9. Verfahren nach Anspruch 7, das ferner Folgendes umfasst:
Bestimmen, ob die Benutzereingabe durch den Finger, den elektronischen Stift oder eine externe Zeigevorrichtung erfolgte;
Bestimmen, ob die Benutzereingabe in dem zweiten Bereich des Displays erfolgt, wenn die Benutzereingabe durch den Finger erfolgte;
Bestimmen, ob die Benutzereingabe in dem dritten Bereich des Displays erfolgt, wenn die Benutzereingabe durch den elektronischen Stift erfolgte;
Bestimmen, ob die Benutzereingabe in einem vierten Bereich (506) erfolgt, wobei der vierte Bereich an den ersten Bereich des Displays angrenzt, den ersten Bereich umgibt und in dem dritten Bereich angeordnet ist, wenn die Benutzereingabe durch die externe Zeigevorrichtung erfolgte; und
Ermöglichen der ersten Anwendung, die Benutzereingabe zu verwenden, als ob die Benutzereingabe in dem ersten Bereich erfolgt wäre, wenn die Benutzereingabe in dem zweiten Bereich, dem dritten Bereich oder dem vierten Bereich erfolgt.

10. Verfahren nach Anspruch 9, wobei die externe Zeigevorrichtung eine Maus enthält.

11. Verfahren nach Anspruch 7, wobei das Anzeigen der ersten Benutzeroberfläche Folgendes enthält:
Bestimmen des ersten Bereichs zum Anzeigen der ersten Benutzeroberfläche über das Display;
Bestimmen des zweiten Bereichs und des dritten Bereichs, die dem ersten Bereich entsprechen; und
Anzeigen der ersten Benutzeroberfläche in dem ersten Bereich des Displays.

## Revendications

1. Dispositif électronique (201) comprenant :
un boîtier (110) ;
un écran (101, 250) exposé à travers une partie du boîtier et étant adapté pour recevoir au moins l'une parmi une entrée de doigt ou de stylo ;
un ou plusieurs processeurs (220) connectés de manière opérationnelle à l'écran ; et
une mémoire (230) connectée de manière fonctionnelle à l'un ou plusieurs processeurs,
où la mémoire est configurée pour stocker des applications incluant des interfaces d'utilisateurs, et
où la mémoire stocke des instructions, qui lorsqu'exécutées, configurent l'un ou plusieurs processeurs pour :
afficher une première interface d'utilisateur d'une première application à travers une première fenêtre (500, 910) dans une première zone de l'écran,
recevoir une entrée d'utilisateur par rapport à un extérieur de la première zone de l'écran,
déterminer si l'entrée d'utilisateur a été fournie par un doigt ou un stylo électronique sur l'écran,
déterminer si l'entrée d'utilisateur est dans une deuxième zone (502), la deuxième zone étant adjacente à la première zone de l'écran et entourant la première zone, lorsque l'entrée d'utilisateur a été fournie par un doigt,
déterminer si l'entrée d'utilisateur est dans une troisième zone (504), la troisième zone étant adjacente à la première zone de l'écran, entourant la première zone, et est positionnée à l'intérieur de la deuxième zone (502), lorsque l'entrée d'utilisateur a été fournie par le stylo électronique, et
permettre à la première application d'utiliser l'entrée d'utilisateur, comme si l'entrée d'utilisateur était fournie dans la première zone, lorsque l'entrée d'utilisateur est dans la deuxième zone ou la troisième zone,
**caractérisé en ce qu'**au moins une partie de la première fenêtre (910) chevauche au moins une partie d'une deuxième fenêtre (920) d'une deuxième application, et
où une taille d'une partie de chevauchement (914) de la deuxième ou troisième zone (912), qui chevauche la deuxième fenêtre, est réduite par rapport à une partie de non-chevauchement de la deuxième ou troisième zone, qui ne chevauche pas la deuxième fenêtre.

2. Dispositif électronique selon la revendication 1, où le boîtier a un renfoncement (107) recevant le stylo électronique.

3. Dispositif électronique selon la revendication 1, où la troisième zone a une superficie inférieure à la superficie de la deuxième zone.

4. Dispositif électronique selon la revendication, où le dispositif électronique peut être connecté de manière opérationnelle à un dispositif de pointage externe, et
où les instructions, lorsqu'exécutées, configurent en outre l'un ou plusieurs processeurs pour :
déterminer si l'entrée d'utilisateur a été fournie par le doigt, le stylo électronique, ou le dispositif de pointage externe,
déterminer si l'entrée d'utilisateur est dans la deuxième zone de l'écran lorsque l'entrée d'utilisateur a été fournie par le doigt,
déterminer si l'entrée d'utilisateur est dans la troisième zone de l'écran lorsque l'entrée d'utilisateur a été fournie par le stylo électronique,
déterminer si l'entrée d'utilisateur est dans une quatrième zone (506), la quatrième zone étant adjacente à la première zone de l'écran, entourant la première zone, et est positionnée à l'intérieur de la troisième zone, lorsque l'entrée d'utilisateur a été fournie par le dispositif de pointage externe, et
permettre à la première application d'utiliser l'entrée d'utilisateur, comme si l'entrée d'utilisateur était fournie dans la première zone, lorsque l'entrée d'utilisateur est dans la deuxième zone, la troisième zone, ou la quatrième zone.

5. Dispositif électronique selon la revendication 4, où le dispositif de pointage externe inclut une souris.

6. Dispositif électronique selon la revendication 1, où les instructions, lorsqu'exécutées, configurent en outre l'un ou plusieurs processeurs pour :
déterminer la première zone pour afficher la première interface d'utilisateur à travers l'écran, et
déterminer la deuxième zone et la troisième zone qui correspondent à la première zone, et afficher la première interface d'utilisateur dans la première zone de l'écran.

7. Procédé de fonctionnement d'un dispositif électronique, le procédé comprenant :
afficher (401) une première interface d'utilisateur d'une première application à travers une première fenêtre (500, 910) dans une première zone d'un écran du dispositif électronique ;
recevoir (403) une entrée d'utilisateur à travers l'écran par rapport à un extérieur de la première zone de l'écran ;
déterminer (405) si l'entrée d'utilisateur a été fournie par un doigt ou un stylo électronique sur l'écran ;
déterminer (603) si l'entrée d'utilisateur est dans une deuxième zone (502), la deuxième zone étant adjacente à la première zone de l'écran et entourant la première zone, lorsque l'entrée d'utilisateur a été fournie par le doigt ;
déterminer (607) si l'entrée d'utilisateur est dans une troisième zone (504), la troisième zone étant adjacente à la première zone de l'écran, entourant la première zone, et est positionnée à l'intérieur de la deuxième zone, lorsque l'entrée d'utilisateur a été fournie par le stylo électronique ; et
permettre (411) à la première application d'utiliser l'entrée d'utilisateur, comme si l'entrée d'utilisateur était dans la première zone, lorsque l'entrée d'utilisateur est dans la deuxième zone ou la troisième zone,
**caractérisé en ce qu'**au moins une partie de la première fenêtre (910) chevauche au moins une partie d'une deuxième fenêtre (920) d'une deuxième application, et
où une taille d'une partie de chevauchement (914) de la deuxième ou troisième zone (912), qui chevauche la deuxième fenêtre, est réduite (805) par rapport à une partie de non-chevauchement de la deuxième ou troisième zone, qui ne chevauche pas la deuxième fenêtre.

8. Procédé selon la revendication 7, où la troisième zone a une superficie inférieure à la superficie de la deuxième zone.

9. Procédé selon la revendication 7, comprenant en outre :
déterminer si l'entrée d'utilisateur a été fournie par le doigt, le stylo électronique, ou un dispositif de pointage externe ;
déterminer si l'entrée d'utilisateur est dans la deuxième zone de l'écran lorsque l'entrée d'utilisateur a été fournie par le doigt ;
déterminer si l'entrée d'utilisateur est dans la troisième zone de l'écran lorsque l'entrée d'utilisateur a été fournie par le stylo électronique ;
déterminer si l'entrée d'utilisateur est dans une quatrième zone (506), la quatrième zone étant adjacente à la première zone de l'écran, entourant la première zone, et est positionnée à l'intérieur de la troisième zone, lorsque l'entrée d'utilisateur a été fournie par le dispositif de pointage externe ; et
permettre à la première application d'utiliser l'entrée d'utilisateur, comme si l'entrée d'utilisateur était fournie dans la première zone, lorsque l'entrée d'utilisateur est dans la deuxième zone, la troisième zone, ou la quatrième zone.

10. Procédé selon la revendication 9, où le dispositif de pointage externe inclut une souris.

11. Procédé selon la revendication 7, où l'affichage de la première interface d'utilisateur inclut :
déterminer la première zone pour afficher la première interface d'utilisateur à travers l'écran ;
déterminer la deuxième zone et la troisième zone qui correspondent à la première zone ; et
afficher la première interface d'utilisateur dans la première zone de l'écran.
